# EUROPEAN PATENT APPLICATION

(11) **EP 3 415 002 A1**
(43) Date of publication of application: **19.12.2018**
(21) Application number: 17175473.2
(22) Date of filing: 12.06.2017
(51) Int. Cl.: A01M 1/02, A01K 67/033

(54) **PROCESS AND DEVICE FOR SEPARATING INSECTS**

(71) Applicant: Ist Austria, 3400 Klosterneuburg (AT)
(72) Inventor: EL MASRI, Leila, 71032 Boeblingen (DE); CREMER-SIXT, Sylvia Maria, 3400 Klosterneuburg (AT)
(74) Representative: Wichmann, Hendrik

(57) **Abstract**

This invention relates to a new technique of insect separation that allows sorting legged from legless insects and insects with non-functional legs; it is suitable for insect sorting devices, techniques and methods used in food, feed, cosmetic and pharmaceutical-industry.

## Description

### Technical field of the invention

The invention relates to a new process for separating insects that allows sorting individuals with means for holding onto rough surfaces from individuals without means for holding onto rough surfaces. It also relates to an insect sorting device. The process and device may be used in food, feed, cosmetic and pharmaceutical-industry applications.

### Background

Wild insects provide high economic values throughout the services they provide, such as (i) dung burial, (ii) forage fouling, (iii) increase of nitrogen volatilization assimilated by plants, (iv) reduction of cattle parasites and pest flies by removing their dung habitat, (v) pollination, (vi) natural pest control, and (vii) diverse recreation and commercial fisheries. The estimated value of those insect services would reach almost $60 billion a year alone in the United States, which is still only a fraction of all the services insects provide.

Moreover insects are important ingredients in the cosmetic industry; for example, the crushed female cochineal insect (beetles) is source of red pigment Carmine/ Cochineal/ Carminic Acid, used as red pigment. Reportedly, 70,000 beetles must be used to produce one pound of this red dye. Because the dye is all natural and safe for human consumption, it's often used in cosmetics (lipstick, shampoos, etc.), food dyes (red apple sauce), and in coffee products and other foods. Another example is the lac insects, *Kerria lacca*. Its resinous excretion is frequently used in food production as a candy glaze as well as in cosmetics in hair lacquer and on jewellery.

Furthermore, insects have been traditionally used in medicine and thus are potentially of high importance for future pharmaceutical usage. In folk medicine, insects and insect extracts have been used for a wide range of conditions including arthritis treatment with *Pseudomyrmex.sp* ant venom. Particularly thought provoking is the account of ants being used to cure lethargy. Altogether in China, 1,700 medicines have been produced from about 300 insect species while 42 species have been used as Folk Medicines in Bahia. In general, however difficulties in species identification, drug toxicity, development costs, and large scale production partially explain the reason for the slow progress in developing insect products as potential modern medicines.

Moreover, edible insects (both wild and domesticated) are of high nutritional importance. They are rich in protein and amino acid, especially essential amino acids, vitamins and carbohydrates, high unsaturated fatty acid, which has excellent nutritive value for the human body. For example, the composition of unsaturated omega-3 and six fatty acids in mealworms are comparable with that in fish (and higher than in cattle and pigs), and the protein, vitamin and mineral content of mealworms is similar to that in fish and meat. Currently it is speculated that by 2050 the world will host 9 billion people. To accommodate this number, current food production will need to almost double. Land is scarce and expanding the area devoted to farming is rarely a viable or sustainable option. Oceans are overfished and climate change and related water shortages could have profound implications for food production. To meet the food and nutrition challenges of today - there are nearly 1 billion chronically hungry people worldwide - our food sources and methods of production need to be re-evaluated. Edible insects- both as food or feed- have always been a part of human and animal diets. Although the majority of edible insects are gathered from forest habitats, innovation in mass-rearing systems has begun in many countries.

Approximately 1,900 insect species are eaten or fed worldwide, mainly in developing countries. They constitute quality food and feed, have high feed conversion ratios, and emit low levels of greenhouse gases. Such as: for every 1 ha of land required to produce mealworm protein, 2.5 ha would be required to produce a similar quantity of milk protein, 2-3.5 ha would be required to produce a similar quantity of pork or chicken protein, and 10 ha would be required to produce a similar quantity of beef protein. On the basis of this study, therefore, mealworms are a more environmentally friendly source of animal protein than milk, chicken, pork and beef. Thus, insect production requires the development of cost-effective, automated mass-rearing facilities that provide a reliable, stable, and safe product.

Globally, the most commonly consumed insects are:
- Beetles (Coleoptera) (31 % of market share)
- Caterpillars (Lepidoptera) (18%)
- Bees, wasps and ants (Hymenoptera) (14%)
- Grasshoppers, locusts and crickets (Orthoptera) (13%)
- Cicadas, leafhoppers, planthoppers, scale insects and true bugs (Heminoptera) (10%)
- Termites (Isoptera) (3%)
- Dragonflies (Odonata) (3%)
- Flies (Diptera) (2%)
- (others: 5%)

Edible insects are consumed at different developmental stages of their life cycle, depending on the species. Lepidoptera are consumed almost entirely as caterpillars and Hymenoptera are consumed mostly in their larval or pupal stages. Both adults and larvae of the order Coleoptera are eaten, while the orders Orthoptera, Homoptera, Isoptera and Hemiptera are mostly eaten in the mature stage. Thus, to maximise and quantify insect production, it is crucial to note the importance for the development of an efficient, reliable, and low-cost separation technique of different developmental stages.

Currently described insect separation methods are:
a. Mechanical:
   - Separate by appearance (brush and mesh, hand, forceps, etc.). This method mainly requires the usage of anaesthetics (e.g. CO₂, ethyl ether, N₂, etc.). In general this method is the simplest, however is by far the most time consuming method as it involves using "man-power" to manually separate different developmental stages of insects. This method is appropriate only when small numbers of individuals are present as it is very time demanding. In general, physical handling of insects may be critical to their rearing. Some insects are particularly fragile at least in one or more stages of their life cycle and depending on the handling person could potentially harm the delicate developmental stages of insects, such as eggs, larvae and pupae.
   - Sieving: In general, sieving has been successfully used to separate different developmental stages of insects, mainly adult flour beetles and pupae from their larvae and eggs. However such method would fail separating the neo-larvae (1-2 days old) from the eggs, as both stages share similar diameters. Moreover sieving social Hymenoptera and Isoptera (such as ants and termites) would be inefficient as adult individuals in those social insects would most probably tightly carry their brood and protect them by not "letting them fall".
b. Chemical:
   - Glycerol was described [1] as a chemical technique to separate eggs of the red pam weevil *Rynocophorus ferrugineurs* from its oviposition substrate. After the substrate sank, the floating eggs were collected with a strainer.
   - Water was described to either separate pupae from the larval medium for the housefly because the pupae floated or to separate pupae of the onion maggot from the larval substrate. However, for this technique to work, it required that the pupae must be a least 48h old before they would float on water (see [1]).

To summarize the above, insect industrialisation (usage in food, feed, cosmetics and pharmaceutical industry) requires on the one hand the maximisation of insect production and quality and on the other hand the innovation of high-throughput techniques for insect separation, as insects are generally consumed at different life stages.

So far, the currently used separation techniques seem to either rely on the manual separation by appearance or on the usage of some mechanical "filters" such as sieving. Both mechanical methods, could potentially harm the delicate developmental stages of insects, are extremely time consuming, and are limited in their application on broad ranges of insects where for example the social behaviour of the adults in e.g., the social insects (such as, for example, ants) results in the protection and mechanically carrying of their brood, making the separation of the brood from the adults very elaborate. In addition to the mechanically developed techniques, several chemically-based techniques have been established, using either water or glycerol as density gradients, to separate different stages of insects depending on own weight/density. The introduction of such chemicals could potentially harm or delay the development of the separated individuals or potentially cause the sacrificing of certain individuals.

Accordingly, one objective underlying the present invention was to improve the existing methods for separating insects by their developmental stage, by using their different capacities to hold onto rough surfaces.

### Summary

The process and device described herein allows for separating individuals with means for holding onto rough surfaces from individuals without means for holding onto rough surfaces. It also relates to an insect sorting device. In contrast to the earlier described techniques, the process and device disclosed herein may be automated allowing for a high throughput of the processing/separation, and require little or no human interaction and are cheap. Furthermore, the process and device described herein has been tested and developed on a broad range of insects, and its potential automation is of high importance for the development of insect industrialisation and their use in food, feed, cosmetic and pharmaceutical industry.

Thus, the invention refers to a process for separating insects, comprising:
Step 1: providing a mixture of insects of one or more insect species, wherein said mixture contains a first group of insects and a second group of insects, wherein the first group consists of individuals with means for holding onto rough surfaces, such as functional legs which can hold onto the surfaces, and the second group consists of individuals without means for holding onto rough surfaces; and
Step 2: optionally immobilizing said mixture of insects by cold shocking or anaesthetizing; and
Step 3: transferring the mixture of insects onto one or more first rough surfaces of a separation device, wherein Step 3 may be prior to or after Step 2, and wherein the first rough surfaces do not contain holes for separating the insects via sieving; and
Step 4: if Step 2 was applied, allowing the immobilized insects to awake until at least two or more of said insects start moving again; and
   optionally, but preferably, inducing vibrations to at least the one or more first rough surfaces; and
Step 5: turning, bending or folding at least parts of the one or more first rough surfaces such that individuals without means for holding onto rough surfaces fall from the one or more first rough surfaces and thereby separate them from the individuals remaining on the one or more first rough surfaces.

The invention also refers to a device for separating individuals with functional legs from individuals without functional legs of one or more insect species, preferably for use in a process as defined herein, comprising
- one or more first rough surfaces onto which a mixture of insects may be placed, wherein at least a part or portion of the one or more first rough surfaces may be turned, bent or folded so that legless individuals and/or individuals with non-functional legs can fall down from said one or more first rough surfaces, and wherein the first rough surfaces do not contain holes for separating the insects via sieving, and
- means for imparting vibrations to at least the one or more first rough surfaces.

The invention further refers to the use of the device for separating overlapping lifestages of insects, in particular for separating a mixture of insects of one or more insect species, wherein said mixture contains overlapping insect lifestages and is a mixture of a first group and a second group, wherein the first group comprises individuals with functional legs, and the second group comprising legless individuals, and/or individuals with non-functional legs.

### Definitions

The term "room temperature" as used herein is understood to mean temperatures of about 21 °C to about 25 °C.

During their life cycle, insects go either through an incomplete metamorphosis or a complete metamorphosis, thus have different life stages. In which of the stages they have legs and in which states they are legless, depends on order or species. Herein, it is distinguished between functional and non-functional legs. Functional legs are legs which can be used by the insects to hold onto a rough surface. The legs can stick to the surface, e.g., because their legs contain claws, hairy structures or suckers. Non-functional legs cannot be used for this purpose to the effect that individuals with non-functional legs fall when the surface on which they sit or lay/ stay/are is flipped. For example, the pupal stages of the holometabolous insects have non-functional legs that are clinging to the body, with the whole body being coated in a pupal skin (free pupae), and in some cases even an additional silk cocoon (cocooned pupae). For example (i) in ants only the adults have functional legs, whereas eggs, larvae and pupae do not, (ii) in beetles the larvae and adults have functional legs, whilst eggs and pupae do not, and (iii) in the hemimetabolous termites only the eggs are legless. Instead or in addition to functional legs, the insects may also have other means for holding onto rough surfaces, such as mouthparts.

A separation success of "x%" is defined to mean that x% of all individuals (by their number) of one specific group obtained by the procedure are in the correct group. The percentages can be determined by randomly taking a sample population of insects of a certain area of a surface and counting the individuals.

The expression "overlapping insect lifestages"/"different insect lifestages" refers to a mixture of individuals with different developmental stages. The individuals can be legged or legless, depending on their developmental stage. It is also possible that different developmental stages with legs exist. Furthermore, different developmental stages without legs may exist. The process described herein can separate developmental stages where the individuals have means for holding onto a rough surface from individuals from developmental stages where the individuals do not have means for holding onto a rough surface. Likewise, the process described herein can separate individuals from different species depending on whether or not they have means for holding onto a rough surface.

"Smooth surface" as referred to herein refers to a surface which is not rough and does not offer enough structure for the individuals to hold onto. Accordingly, all insects, in particular insects with functional and non-functional legs as well as legless insects, will fall of said surface once it is turned to a sufficient degree.

### Detailed description

Herein, a new process for separating individuals with means for holding onto rough surfaces from individuals without means for holding onto rough surfaces, such as individuals with functional legs from legless individuals and/or individuals with non-functional legs. One particular problem of the prior art methods is that insects, which carry and protect their brood, are difficult/impossible to separate from their brood. This problem and other problems have been overcome by the present invention, since the insects are firstly immobilized by cold shock and, once they awake again, vibrations are applied to the surface on which the insects were placed, to the effect that the insects grab the surface but not their brood and may thus be separated therefrom. Accordingly, the present invention relies on the simple behaviour of the insects themselves once they awaken from a cold shock (or other methods to immobilize the insects).

The method requires only a short cold shocking step of the insects, and, thus, does not necessarily require any chemicals or "direct" mechanical handling of the insects. Depending on the insect species (e.g., non-social insects), the step of immobilizing and inducing vibrations can even be omitted. The inventors did not observe any immediate negative effects on the insects when applying the cold shocking method. However, if desirable, it is possible to use chemicals or gases, e.g., CO₂, for anaesthetizing the insects instead of cold shocking, while still using other benefits of the invention. The present method is a time saving method, where the whole process may, e.g., require only 3-20 minutes depending on the respective insect species. In contrast to other prior art chemical methods or human separation by hand of different stages of insects, this method requires low to no human power. The method may be automated which allows to separate a very high number of individuals in short time. When using a high throughput automation of the presented invention tonnes of individuals of insects may be processed.

Based on the present process, a device for performing the same was designed, wherein the device may be dimensioned to the desired loads of insects to be separated.

The process and device allow for a mechanical separation in an automated way. The separation process and device of the present invention has been tested on a broad range of insects. The present invention may be used in food, feed, cosmetic and pharmaceutical industry.

Accordingly, the objective underlying the present invention has been solved.

The invention is further described with respect to the following items and embodiments:
1. The invention refers to a process for separating insects, comprising:
   Step 1: providing a mixture of insects of one or more insect species, wherein said mixture contains a first group of insects and a second group of insects, wherein the first group consists of individuals with means for holding onto rough surfaces, and the second group consists of individuals without means for holding onto rough surfaces; and
   Step 2: optionally immobilizing said mixture of insects by cold shocking or anaesthetizing so that at least two or more of said insects stop moving; and
   Step 3: transferring the mixture of insects onto one or more first rough surfaces of a separation device, wherein Step 3 may be prior to or after Step 2, and wherein the rough surfaces do not contain holes for separating the insects via sieving; and
   Step 4: if Step 2 was applied, allowing the immobilized insects to awake until at least two or more of said insects start moving again, i.e. allowing the mixture of cold shocked insects to awake from their immobilization until at least two or more of said insects start moving again, and/or allowing the mixture of anaesthetized insects to awake from their anaesthesia until at least two or more of said insects start moving again; and, preferably
      simultaneously (i.e. during the phase of awakening) or directly after the insects are awake from immobilization, optionally inducing vibrations to at least the one or more first rough surfaces; and
   Step 5: turning, bending or folding at least parts of the one or more first rough surfaces such that individuals without means for holding onto rough surfaces fall from the one or more first rough surfaces and thereby separate them from the individuals remaining on the one or more first rough surfaces.

In a preferred embodiment, the process is used for separating different insect lifestages/developmental stages of one or more insect species, wherein said mixture of insects contains insects with different lifestages and wherein the mixture contains individuals from at least one lifestage without means for holding onto rough surfaces and individuals from at least one lifestage with means for holding onto rough surfaces. The means for holding onto rough surfaces allow the insects to hold onto rough surfaces as used in the process.

Preferably, the means for holding onto rough surfaces of the first group of insects are functional legs, and the second group of insects comprises legless individuals and/or individuals with non-functional legs.

### Step 1 - providing the mixture of insects

The process separates a first group of insects that consists of individuals with means for holding onto rough surfaces, preferably individuals with functional legs, from the second group of insects that consists of individuals without means for holding onto rough surfaces, preferably legless individuals, and/or individuals with non-functional legs. The mixture of insects is not necessarily, but in one embodiment, of the same species. The process can thus be used to e.g., separate overlapping insect lifestages, i.e. a mixture of different insect life-stages with or without means for holding onto rough surfaces or for separating insect with or without means for holding onto rough surfaces, or a mixture of different insect species and different lifestages.

The first group includes individuals with means for holding onto rough surfaces, preferably with functional legs, due to their developmental stage or because of the species to which they belong to. There may thus be individuals with functional legs from different species. Due to their developmental stage or because of the species to which they belong to, the second group includes individuals without means for holding onto rough surfaces, preferably legless individuals and/or individuals with non-functional legs. There may be individuals with non-functional legs and/or legless individuals from different species. Overlapping insect lifestages of one insect species refers to a mixture of individuals of the same insect species. Overlapping insect lifestages of more than one insect species refers to a mixture including individuals of different species, wherein the "first group" contains individuals from the one and/or further species and the "second group" contains individuals from the one and/or further species. In a typical scenario of overlapping insect lifestages of more than one insect species, the "first group" includes individuals of all different species and the "second group" also contains individuals of all different species.

It is not required that there are individuals with different developmental stages (individuals with functional legs and/or non-functional legs and/or legless individual) of each species. Of course, in order to separate the mixture of insects, the mixture needs to comprise at least some individuals with means for holding onto rough surfaces and some others without means for holding onto rough surfaces, irrespective of their species. If the separation is not complete, i.e. the separation success is not 100%, the first group will contain a certain amount of individuals from the second group and/or the second group will contain a certain amount of individuals from the first group. Typically, the separation process is higher for the first group, i.e. the first group contains only few, if any, individuals of the second group, i.e. more legged individuals will fall down into the legless group than legless will remain with the legged.

The device and method of the present invention is suitable to provide a separation success of at least 95%, preferably at least 96%, further preferred at least 97%, even more preferred at least 98% and most preferred at least 99% regarding the first group and/or second group. In one embodiment, the aforementioned separation success refers to the first group which remains on the first rough surfaces after steps 1-5 have been performed. If the insects have functional wings, they may not be suitable for the process because they may simply fly away/around during the process.

In order to have a good separation success, the turning/flipping/bending/folding of the surfaces should be performed only after the majority or all insects awoke. The vibrations can start immediately in/during or after Step 3 to prevent insects waking up to grab the brood. If one would immediately start bending or bends to early, the separation would be minimal as all the still immobilized ones would fall into the legless group.
2. The invention refers to a process of the preceding item, wherein the mixture of insects comprises at least 90 %, preferably at least 95 %, further preferred at least 98 % or 100 %, of insects of the same species.
   The percentages, like all percentages referred to herein, can be determined by counting. For this purpose, a sample population of a certain area of the one or more rough surfaces is taken after the individuals have been transferred thereto and the individuals are then counted. For this purpose, the sample individuals may either be cold shocked or killed or photographed or filmed.
3. The invention refers to a process of any of the preceding items, wherein the mixture of insects comprises legged and functionally legless individuals, wherein the legless individuals preferably are larvae, eggs and/or brood.
   In one embodiment, the overlapping insect lifestages comprise individuals with functional legs and individuals with non-functional legs. In one embodiment, the overlapping insect lifestages comprise individuals with functional legs, individuals with non-functional legs and legless individuals. Reference is made to the Example Section herein, where certain insect species and their developmental stages are described in more detail.
4. The invention refers to a process of any of the preceding items, wherein the insect species are selected from the group consisting of: beetles (Coleoptera); butterflies (Lepidoptera); bees, wasps and ants (Hymenoptera); grasshoppers, locusts and crickets (Orthoptera); cicadas, leafhoppers, planthoppers, scale insects and true bugs (Heminoptera); termites (Isoptera); cockroaches (Blattoidea); dragonflies (Odonata); flies (Diptera) and mixtures of the aforementioned.

In one embodiment, (i) holometabolous insects, or (ii) hemimetabolous are used. In one embodiment, the group of insects consists of the ants (i) *Lasius niger,* (ii) *Linepithema humile,* and (iii) *Cardiocondyla obscurior,* (iv) the beetle *Tribolium castaneum,* and (v) the termite *Reticulitermes grasse.*

### Step 2 - cold shocking or anaesthetizing the insects

Step 2 is the optional step of cold shocking of, or, while being less preferred, the anaesthetization of the mixture of insects, coming from either colonies (ants, termites, etc.) or populations (beetles, etc.). It is preferably performed until most of the insects (e.g., 90%), or the whole mixture of insects stops moving, i.e. are immobilized. The percentages of insects may be determined by counting a sample as described elsewhere herein.
5. The invention refers to a process of any of the preceding items, wherein the cold shocking of the mixture of insects is achieved by cooling the one or more first rough surfaces to which the insects have been transferred to in step 3 and/or by cooling the container containing the insects and/or by introducing a cold gas onto the mixture of insects, wherein the cold gas preferably is air.
6. The invention refers to a process of any of the preceding items, wherein anaesthetizing the mixture of insects is achieved by introducing an anaesthetizing gas.
7. The invention refers to a process of any of the preceding items, wherein the cold shocking of the mixture of insects is performed for 1 to 600 seconds, preferably 1 to 300 seconds, further preferred 2 to 30 seconds.
8. The invention refers to a process of any of the preceding items, wherein cold shocking the mixture of insects is performed at a temperature of from 12°C to -50°C, preferably -0°C to -20°C.
   In one embodiment, cold shocking the mixture of insects is performed at a temperature from -4°C to -20°C for 1 to 600 seconds, preferably 1 to 30 seconds.
9. The invention refers to a process of any of the preceding items, wherein the cold shocking of the mixture of insects is performed (a) by placing a container with the insects in a low temperature environment, e.g., in a freezer, or (b) by introducing cold gas, preferably air, into said container, or (c) by cooling the surfaces, e.g., made of metal, that can be cooled down and heated again fast, on top of which a rough surface exists.

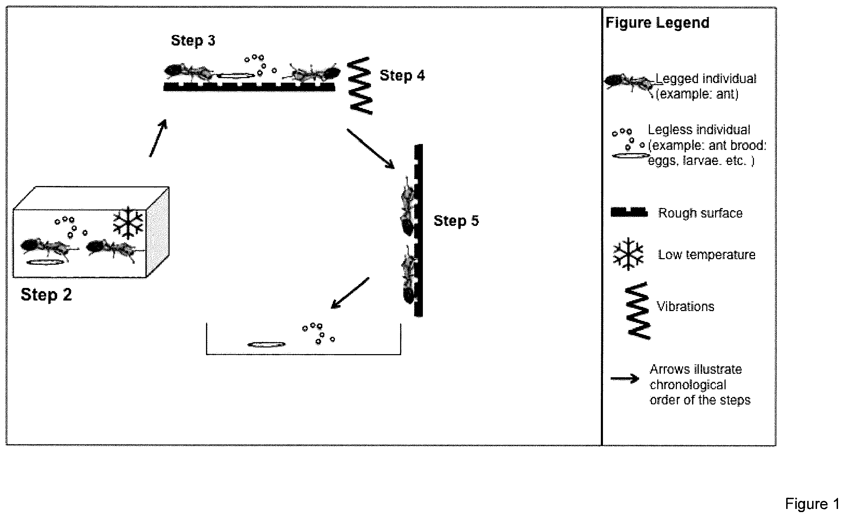

When cooling the container with the insects from outside, it is preferred to use a container/box with thin walls (e.g., plastic container/box), in particular with a thin bottom wall, to allow for a fast heat exchange (see Fig. 1). Step 2 is preferably performed until no movement of the insect may be visually determined.

### Step 3 - transferring

In step 3, the mixture is transferred onto the first rough surfaces. This may be done either before or after step 2. This means that either the immobilized, i.e. non-moving cold shocked/anaesthetized individuals, or the active/moving (not cold shocked/not anaesthetized) individuals are transferred. The insects may be transferred by pouring the mixture from a containment onto the one or more first rough surfaces. Care should be taken not to hurt the insects.

The process may be adapted to be suitable for the desired overall number of individuals, which may vary between a dozen till hundreds of thousands of individuals depending on the dimensions of the one or more first rough surfaces, e.g., a tissue paper surface (see Figure 1).
10. The invention refers to a process of any of the preceding items, wherein the amount/number of insects is chosen to provide less than a monolayer of insects on the one or more first rough surfaces, when the insects are evenly distributed.
11. The invention refers to a process of any of the preceding items, wherein the cold shocked/anaesthetized insects are evenly distributed on the one or more first rough surfaces, so that each individual gets in contact with the rough surface.

In step 2, it is preferred to distribute the cold shocked/anaesthetized insects over the entire first rough surface to avoid multilayers of insects as good as possible. This can be performed by pouring the insects evenly over the whole surface. Reason for this is that the insects shall have the possibility to grab a surface once they awake. If the amount of insects is too high compared to the surface area of the one or more first rough surfaces, insects with functional legs may not be able to reach the rough surface or hold onto each other (grabbing either other legged or the legless) or at least not fast enough and fall off after flipping the surface. While the method is then still suitable for separating insects, the separation success will decrease to some extent.

### Step 4 - awakening - vibrating

In this step, the insects are allowed to reach a state where they can move again. In particular, they awake from their cold shock state. The warming may, for example, be achieved by stopping the cooling process, e.g., stopping to cool the first rough surface, by stopping to introduce cold air, or by introducing air which has at least room temperature or by warming up the rough surface itself (e.g., the metal plate). In insects that may grab their brood, the vibration (but not the flipping, Step 5) should start immediately after the cold shocking before the first individuals awaken. If the first individuals awaken and get enough time to grab the first brood (example in social insects) before vibrations are induced/effected the efficiency of the method would drop.

Once the insects awaken, they will grab the moving/shaking/vibrating rough surface. The insects are considered to be awake if at least some, preferably a predominant number, or even all insects with functional legs are moving again and will thus start grabbing the surface. Of course, individuals without functional legs like eggs or pupae cannot grab the surface. The method is suitable for separating the developmental stages of insects or different insect species or both. If the rough surfaces are turned while a certain amount of insects is still cold shocked and not yet able to grab the surface, the separation success will decrease. Therefore, it is preferred to turn/flip/bend the surfaces only after a predominant percentage of insects has grabbed the surface.

Before individuals start awakening, short vibrations are applied to the rough surface(s), e.g., by using a shaking device/vibrator. Since the behaviour of grabbing the surface is only relevant for individuals with functional legs, the awakening of the individuals with functional legs is of interest. At this step, the vibrations are applied to reach that the awakened individuals with functional legs will actively stick to/hold onto the surface whereas the legless individuals and individuals with non-functional legs will stay loose (see Figure 1).

The duration of grabbing onto the surface once the vibrations have stopped, i.e. until the insects move again, may be 10-200 seconds.
12. The invention refers to a process of any of the preceding items, wherein vibrations are imparted, preferably the vibrations are applied immediately after cold shocking, namely before the first insect starts to move. The duration of vibrations should continue till one or many individuals have anchored themselves on the rough surface. If vibrations are strong enough the social insects will need to hold on the surface, and will not go to the brood.
13. The invention refers to a process of any of the preceding items, wherein the time period between stopping the cooling process and starting the vibrations is from 0 seconds to 15 minutes.
14. The invention refers to a process of any of the preceding items, wherein the vibrations are periodically applied, and last between 0.5 seconds and 15 minutes.

### Step 5 - Flipping/turning/bending/folding

In step 5, at least parts of the one or more first rough surfaces, preferably the whole surfaces, are turned (flipped)/bent/folded to provide that legless individuals and individuals with non-functional legs fall from the one or more first rough surfaces, preferably onto one or more second surfaces. Flipping/turning/bending may mean that foldable surfaces are folded downwards, e.g., by at least 30°. It is not required to turn the surfaces by 180°. In one embodiment, the surfaces are turned out of the horizontal plane by 30° to 140°, preferably by about 90°, i.e. the surfaces are turned to be vertically oriented.

Once the majority of individuals with functional legs have grabbed the rough surfaces, the surfaces are turned and the insects, which do not stick, fall to a further rough or smooth surface of the device or are directly collected in a container. At this point, the awakened individuals with functional legs (first group) will still be actively grabbing onto the first rough surface, whereas the rest of the individuals (i.e. the second group or at least most of the second group and some of the first group) will be falling from the first rough surface, preferably onto one or more second surfaces, e.g., a tissue surface (see Figure 1).
15. The invention refers to a process of any of the preceding items, wherein Step 5 is performed such that at least 50%, preferably at least 80% or even more preferred at least 90%, of the individuals with functional legs do not fall from the one or more first rough surfaces.

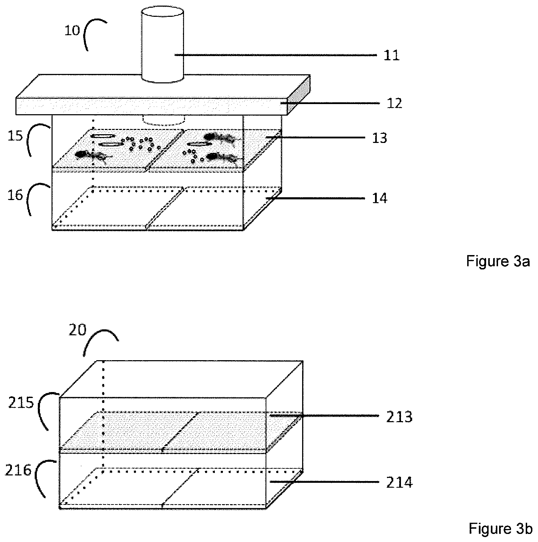

It is then possible to repeat the separation process for the first rough surfaces, if the first rough surfaces still contain individuals from the second group, in particular legless individuals and/or individuals with non-functional legs. It is also possible to continue the separation process with the individuals from the second surfaces. If the second surfaces are smooth surfaces, the individuals with functional legs do not stick and the whole mixture of the first group and second group may be transferred to another rough surface or a further device. This setup allows using the devices as shown in Figure 3a and 3b, having first rough surfaces and second smooth surfaces, and placing a desired number of devices above of each other, depending on the desired number of separation cycles, e.g. 2 or 3 devices are placed above each other.

However, it is also possible to use only rough surfaces or to use a smooth surface only for the lowest surface(s) of the different levels of surfaces. If more than one separation cycle (steps 1-4) is performed with the first rough surfaces and, subsequently, with further (lower level) rough surfaces, the first group (individuals with functional legs) will be on the first rough surfaces and at least on one lower level rough surface. However, if the separation cycle is repeated with the first rough surface(s), the first group of insects will still be on the one or more first rough surfaces after the separation cycles. Therefore, the question where the first and second groups are collected at the end of the process depends on the number of rough and smooth surfaces and on the number of separation cycles, which are performed for each rough surface.
16. The invention refers to a process of any of the preceding items, wherein the steps 1-4 are performed in the specified order.
   It is important to note that the claimed process is not limited to steps 1-5. It is possible to perform further steps between steps 1 and 2, between steps 2 and 3, etc. It is also possible to continue with further steps, e.g., with further separation steps. In particular, a step 6 is performed to collect the individuals from all or at least some of the surfaces. As described above, the separation cycle may either be repeated with rough surfaces, which have already been used for separation or with further rough surfaces. Furthermore, smooth surfaces may be inserted between the rough surfaces as desired, e.g., for allowing easier handling.
17. The invention refers to a process of any of the preceding items, wherein steps 2, 4 and 5 are repeated for the insects of the one or more first rough surfaces.

### Step 6 - collecting

Step 6 refers to collecting the insects, i.e. removing the insects from the device/surfaces for further use or storage. Step 6 is optional, but typically the insects will be removed from the device/surfaces at some point in time. "Collecting" means removing the first and second group of insects from the rough and smooth surfaces.
18. The invention refers to a process of any of the preceding items, wherein the individuals from the second surfaces are transferred to one or more third surfaces, preferably one or more third rough surfaces.
19. The invention refers to a process of any of the preceding items, wherein the individuals from the one or more first rough surfaces, and/or from the one or more second surfaces and/or from the further surfaces are collected.

### Further steps - repeating the separation cycle

20. The invention refers to a process of any of the preceding items, wherein steps 2, 4 and 5 are repeated for the insects of the one or more second rough surfaces or the one or more third rough surfaces.
21. The invention refers to a process of any of the preceding items, wherein the procedure of steps 2, 4 and 5 is repeated for the insects of the one or more first rough surfaces, if the one or more first rough surfaces still contain individuals with non-functional legs or legless individuals.
22. The invention refers to a process of any of the preceding items, wherein the one or more second surfaces are rough surfaces, and wherein the procedure of steps 2, 4 and 5 is repeated for the insects of the one or more second rough surfaces.

In step 6, at least most of the sorted individuals of the desired surfaces are transferred into a container or storage place or directly further processed as desired. The first and/or second groups of individuals are collected either as the last step of the process or are collected from the rough or smooth surfaces as desired, while the separation cycles are continued after collecting insects from one or more surfaces. Accordingly, the individuals from the first rough surfaces are collected either directly after the first/only separation cycle or later.

Furthermore, the individuals from the second surfaces are collected either directly after the first/only separation cycle or later. Otherwise, the individuals of the second surfaces may also be passed to one or more third surfaces as described above.

In one embodiment, the first group is collected from the one or more first rough surfaces after steps 1-5 have been performed. Then, the mixture of individuals (a mixture of the first and second group, if the separation success is below 100%) which has fallen to the one or more second surfaces or into a container (which is positioned below the one or more first rough surface to capture the falling individuals) is then placed onto the one or more rough surfaces again. This allows performing several separation cycles by using the one or more first rough surfaces several times.
23. The invention refers to a process of any of the preceding items, further comprising flipping the one or more second surfaces so that the insects fall to one or more third rough surfaces, and repeating the procedure in Steps 1-4 for the insects of the one or more third rough surfaces starting with further cold shocking or anaesthetizing said mixture of insects.

In the following, a device for performing the process of the invention will be described. It is preferred to use the device of the invention for performing the process of the invention. Accordingly, in one embodiment, the process of any of the preceding items, is performed by using a device of the invention, in particular according to items D1-D22 as set forth below.

### Device for separation of insects

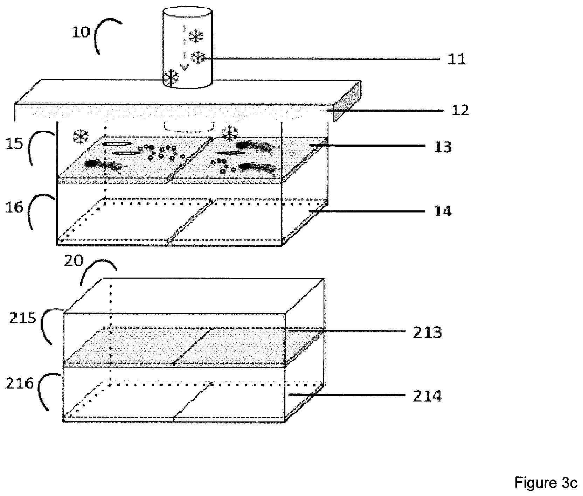

D1. The invention refers to a device for separating individuals with functional legs from individuals without functional legs of one or more insect species, comprising
   - one or more first rough surfaces onto which a mixture of insects may be placed, wherein at least a part or portion of the one or more first rough surfaces may be turned, bent or folded so that legless individuals and/or individuals with non-functional legs can fall down from said one or more first rough surfaces, and wherein the first rough surfaces do not contain holes for separating insects, such as ants from their eggs, via sieving; and
   - means for imparting vibrations to at least the one or more first rough surfaces. Examples of holometabolous insects are the ants (i) *Lasius niger*, Formicinae (ii) *Linepithema humile*, Dolichoderinae (iii) *Cardiocondyla obscurior*, Myrmicinae, and (iv) the beetle *Tribolium castaneum*, and as example of the hemimetabolous insects (v) the termite *Reticulitermes grasse*.
      The device may comprise two or more levels of surfaces arranged above each other. The surfaces may be horizontally arranged or (slightly) turned out of the horizontal plane in a manner that the legless individuals and individuals with non-functional legs do not roll down without further turning the surfaces. Accordingly, the one or more first rough surfaces are configured in order that the cold shocked or anaesthetized insects do not fall off the surface by sliding or rolling. Preferably, the first rough surfaces is/are substantially planar and is/are horizontally arranged. The first rough surfaces do not need to be planar, but they have to be shaped in order that they may be flipped so that the legless individuals and/or individuals with non-functional legs fall off, while the individuals with functional legs can hold onto it.
D2. The invention refers to a device of the preceding item, wherein the total surface area of the one or more first rough surfaces (13, 213) is at least 10 cm², at least 1000 cm², or at least 3 m².
D3. The invention refers to a device of any of the preceding items, wherein the one or more first rough surfaces (13, 213) is/are made of cellulosic material, wood, finely creped paper, such as paper tissue paper, paper towels, paper napkins, toilet paper, or metal optionally with a coating to impart roughness, or polymeric material.
   The same materials may also be used for any further rough surfaces of the device. Preferably, all rough surfaces of the device are made from such materials. However, any material which fulfils the requirement of being rough may also be used (see the protocol for determining whether a surface is rough as described below).
D4. The invention refers to a device of any of the preceding items, comprising one or more second smooth or rough surfaces (14, 214).
D5. The invention refers to a device of any of the preceding items, wherein the one or more second surfaces (14, 214) are positioned at a level below the one or more first rough surfaces (13, 213) so that insects can fall to said one or more second surfaces when turning/bending/folding the one or more first rough surfaces.
D6. The invention refers to a device of any of the preceding items, wherein the one or more first rough surfaces (13, 213) are positioned at the same horizontal level.
D7. The invention refers to a device of any of the preceding items, comprising two, three or four, preferably two, first rough surfaces, which are preferably positioned at the same horizontal level.
D8. The invention refers to a device of any of the preceding items, comprising rough surfaces at two different levels and which rough surfaces can all be turned, bent or folded so that legless individuals and/or individuals with non-functional legs can fall down to a lower level, and vibrations can be imparted to the rough surfaces
   The further rough surfaces may be used in subsequent separation cycles.
D9. The invention refers to a device of any of the preceding items, wherein the rough surfaces can be turned by up to 180°, preferably 90°, with respect to the horizontal plane, and/or wherein the one or more rough surfaces are flips/traps (see Figures 3-6).
D10. The invention refers to a device of any of the preceding items, comprising two first rough surfaces.
D11. The invention refers to a device of any of the preceding items, wherein the device comprises a container and the one or more first rough surfaces are the bottom or intermediate floor of the container, wherein the container may further comprise a lid.
D12. The invention refers to a device of any of the preceding items, wherein the device comprises a container and the one or more, preferably two, first rough surfaces are the intermediate floor of the container and the one or more second surfaces are the bottom of the container.
D13. The invention refers to a device of any of the preceding items, wherein the device consists of two devices as defined in item 12 which are placed above each other.
   The devices can be placed above each other and can be fixed together. However, this fixation, in particular a tight/sealing fixation, is not mandatory as the devices can be arranged above each other so that the insects can fall from one device the lower device, even if there is some distance between the devices.
D14. The invention refers to a device of any of the preceding items, wherein the one or more first rough surfaces and/or the one or more second surfaces and/or any further surfaces are foldable, and the step of turning the surfaces refers to folding/flapping at least one part of said surface(s) downwards.
D15. The invention refers to a device of any of the preceding items, comprising a lid with an air transferable membrane which forms a compartment (15) together with the one or more first rough surfaces and side walls.
   The lid can be provided with a gas inlet, e.g., for introducing cold gas, such as air, or for introducing anaesthetizing gas. In another embodiment, a box, such as a metal box, is used which can be cooled and in which there is, for example, a tissue paper connected to the bottom that forms the rough surface.
D16. The invention refers to a device of any of the preceding items, wherein the one or more first surfaces, together with side walls, form a first compartment (15), preferably wherein the device comprises one or more second, preferably smooth, surfaces which, together with side walls, define a second compartment (16) which is arranged below the first compartment (15).
D17. The invention refers to a device of any of the preceding items, wherein the means for imparting vibrations to the one or more rough surfaces is a shaking device or vibrator, preferably including a motor, adapted to impart vibrations, in particular horizontal and/or vertical reciprocating movements, to the surfaces.
D18. The invention refers to a device of any of the preceding items, further comprising means for controlling the means for imparting vibrations to the one or more first and further rough surfaces, which means can be programmed to define the duration, frequency/frequencies, interruption and intensity of the vibrations.
D19. The invention refers to a device of any of the preceding items, further comprising means for turning the one or more first rough surfaces, and/or the one or more second rough surfaces and/or any further surfaces.
D20. The invention refers to a device of any of the preceding items, further comprising means for cooling the one or more first and/or further rough surfaces.
D21. The device of any of the preceding items, which is an automated device, which can be programmed to perform one or more, preferably all, of steps 1-5, 2-5, or 1-6 described herein.
D22. The invention refers to a device of any of the preceding items, which comprises one or more of a (i) means for cooling the first rough surfaces, (ii) means for cooling the environment above the first rough surfaces, and (ii) means for introducing anaesthetizing gas into the environment above the first rough surface. For example, the means for cooling the environment above the first rough surfaces can be a gas inlet, optionally fixed to a cooling device.
   The invention also refers to the use of the device of the present application as set forth below:
U1. The invention refers to the use of the device of any of items D1-D22 for separating overlapping lifestages of insects, in particular for separating a mixture of insects of one or more insect species, wherein said mixture contains overlapping insect lifestages and is a mixture of a first group and a second group, wherein the first group comprises individuals with functional legs, and the second group comprising legless individuals, and/or individuals with non-functional legs.
U2. The invention refers to the use of item U1, wherein the use is in a food, feed, cosmetic or pharmaceutical-industry application.

The foregoing and other features of the present disclosure will become more fully apparent from the following description and appended claims, taken in conjunction with the accompanying drawings. Understanding that these drawings depict only several embodiments in accordance with the disclosure and are therefore not to be considered limiting of its scope, the disclosure will be described with additional specificity and detail through use of the accompanying drawings.

### Measuring instruments, conditions and protocols:

### Test for surface roughness

A surface is considered rough, if the insects (to be separated) with functional legs can stick to it while the surface is turned out of the horizontal plane by 30° to 140°, preferably by about 90. Preferably, such a test is performed with 10 insects, which are cold shocked and, after at least 2 insects awake upon warming to room temperature, vibrations are imparted for 4 seconds and the surface is turned by 30° to 140°, preferably by about 90°. If at least one insect with functional legs sticks to the surface, the surface is considered rough. The roughness of the surface of the device of the invention is defined by using insects with functional legs.

The following examples describe the present invention in detail, but are not to be construed to be in any way limiting for the present invention. Preferred embodiments of the method, use and devices of the present invention are described in greater detail with reference to the attached schematic drawings in the following.

### List of figures

- Figure 1:: Shows the most important steps of one embodiment of the process of the invention. In step 2, the mixture of insects is cold shocked, at e.g., -4 to -20°C, until the individuals with functional legs stop moving. In step 3, the mixture of insects is transferred onto rough surfaces. The transfer can also take place before the cooling step. In step 3, the rough surface is shaken and to create vibrations. In step 4, the rough surface is flipped/turned once individuals with functional legs stick to the rough surfaces so that the legless individuals and individuals with non-functional legs fall to second surfaces. The sorted insects can then be removed for storage, further separation or further use.

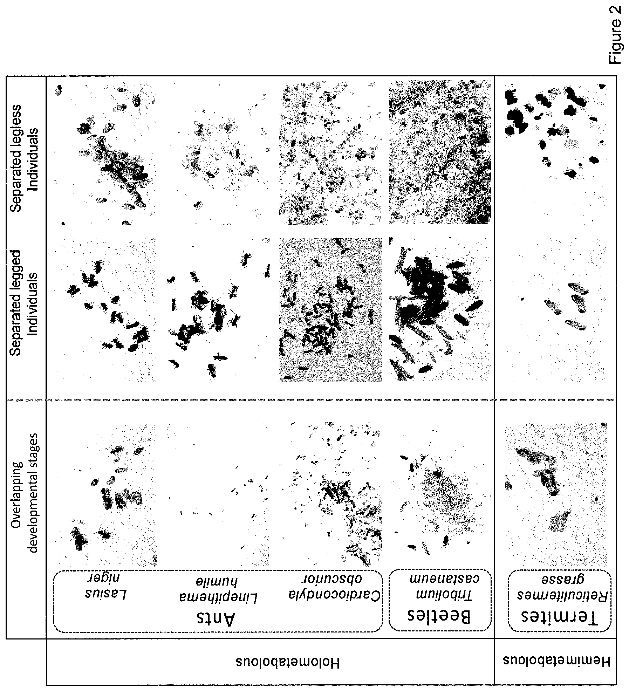

- Figure 2:: Shows insects mixtures of different developmental stages, characterized by either functional vs non-functional legs, before the separation as well as after the separation according to the legs. Representative photographs show the starting mixture of insects (left column) the end product of separated individuals (right column). The pictures illustrate five insect species, which were successfully separated. From top to bottom: holometabolous: ants from three very common subfamiles: (i) *Lasius niger*, Formicinae (ii) *Linepithema humile*, Dolichoderinae (iii) *Cardiocondyla obscurior,* Myrmicinae, and (iv) the beetle *Tribolium castaneum*, and (v) the hemimetabolous termite *Reticulitermes grasse*.
- Figure 3a:: Shows a separation device 10 in the form of a cuboid box, having a cold air channel 11, a lid with air transferable membrane 12, first rough surfaces 13 and second smooth surfaces 14. The first rough surfaces can be flipped/turned and vibrations can be imparted by means of e.g., a vibrator, such as a vibrator including a motor (not shown). The second smooth surfaces 14 can also be flipped/turned. The first compartment 15 is the compartment above the first rough surfaces 13. The second compartment 16 is below the first rough surfaces 13 and above the second, in this case smooth (but note that it can also consist of a second rough surface), surfaces 14. The compartments 15 and 16 form the first box.
- Figure 3b:: Shows a separation device 20 in the form of a cuboid box, which corresponds to Figure 3a, wherein the cold air channel 11 and the lid with air transferable membrane 12 are omitted (also the insects are not shown, since these are not part of the device). Separation device 20 can also be used in combination with separation device 10 to provide further separation levels (see Figure 3c).
- Figure 3c:: Shows a combination of the separation devices 10 and 20 of Figures 3a and 3b.

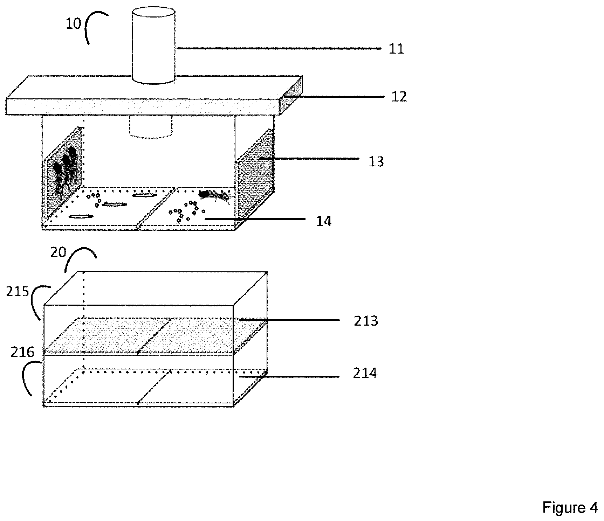

- Figure 4:: Corresponds to Figure 3c, wherein the first rough surfaces 13 have been flipped and legless individuals and individuals with non-functional legs are located on the second, in this case smooth, surfaces 14. The individuals with functional legs stick to the first rough surfaces.

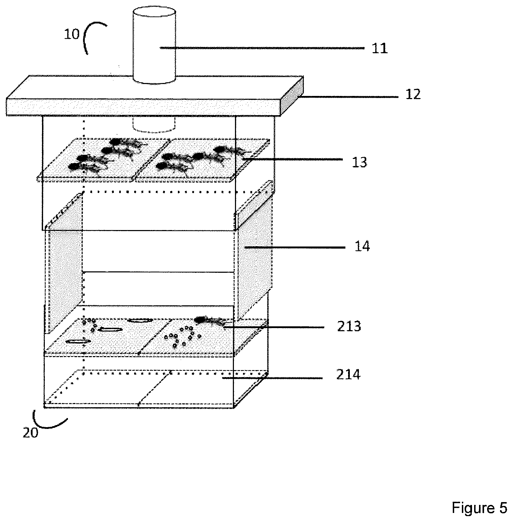

- Figure 5:: Shows the separation device of Figure 4, wherein the individuals with functional legs are on the first rough surfaces and the remaining individuals have been transferred from the second smooth surfaces to the third rough surfaces 213 for further separation. The legless individuals and individuals with non-functional legs will fall to the fourth smooth surfaces 214.

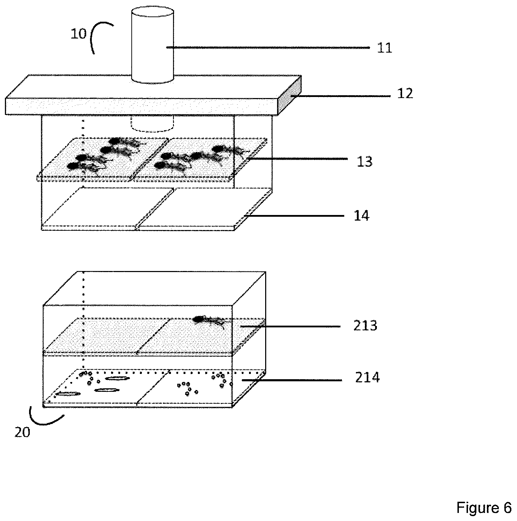

- Figure 6:: Shows the separation device of Figures 4 and 5, wherein the individuals with functional legs are on the first rough surfaces and further individuals (from the second separation cycle) with functional legs are on the third rough surfaces. The remaining individuals are on the fourth smooth surfaces 214.

Figure 3a shows a separation device 10 having a cold air channel 11 for introducing cold air or other gases and a lid with an air transferable membrane 12. The cold air channel 11 is optional (see Figure 3b) and it is possible to either transfer cold shocked/anaesthetized insects to the first rough surfaces or to cool the separation device by placing it in a low temperature environment or by introducing cold air from a separate device or by cooling the surfaces themselves. It is also possible to cool the first rough surfaces.

In Figure 3a, the insects are located in the first compartment 15, on the first rough surfaces 13. The first rough surfaces can be flipped/turned and vibrations can be imparted by means of e.g., a motor (see Figure 4). Once the insects (in particular the legged individuals) do not move anymore, if applicable, the cold air stream or other cooling is stopped, and the first compartment 15 is allowed to warm to ambient temperature or the individuals are given time to awake from their anaesthesia. Once the first, or most of the, insects start moving again, the first rough surfaces 13 are vibrated in order that the insects grab and stick to the rough surfaces. As shown in Figure 4, the first rough surfaces 13 are then flipped so that the legless insects (e.g., eggs) and insects with non-functional legs (pupae), fall onto the second smooth surfaces 14, while the legged individuals stay attached to the first rough surfaces 13. The second. e.g. smooth, surfaces 14 can also be flipped/turned for collecting the individuals or further separation of the individuals.

In Figure 3c, which shows a combination of the devices 10 and 20 of Figures 3a and 3b, i.e. a combination of a first box and a second box, wherein further rough and smooth surfaces are provided by device 20 which allows applying a further separation step of the insects in the second compartment 16 which have fallen onto the second smooth surfaces 14. The use of second smooth surfaces 14 is optional in this embodiment, meaning that it is also possible to use second rough surfaces so that it is not required to flip the second surface before the further cold shocking step.

In Figure 5, the device of Figure 3c is shown wherein a first separation cycle has been performed and the legged individuals are on the first rough surfaces 13 and the remaining individuals have been transferred to the third rough surfaces 213 by turning of the second smooth surfaces 213.

In Figure 6a, all surfaces are flipped back in the original, horizontal position after a second separation cycle has been performed with the third rough surfaces 213.

### Examples

In our further experiments we tested our separation technique on five distinct insect species that could be grouped as follows: (i) three ant species representing the most important subfamilies of ants (Formicinae, Dolichoderinae and Myrmicinae), (ii) one beetle species and (iii) one termite species.

### Example 1: Ants

In general, several ant species are consumed as food sources in different cultures. For example in the weaver ant, typically it is the larvae and pupae, particularly the large ones destined to become virgin queens, which are consumed. On the other hand, in honey ants, it is the adult ants that were consumed as an important source of carbohydrates for indigenous Australians. Ants belong to the holometabolous insects with a pupal stage, order Hymenoptera, family Formicidae. All ants are eusocial species, forming colonies where the queen lays the eggs and the workers feed, clean, and groom the queen and transport, feed and clean the brood and protect it until the young adults emerge. Workers are known to grab their brood at any disturbance to transport it to a save place, and would aim to do so once any trials of separation would be implemented. Thus separating the brood that is legless or has non-functional legs (eggs, larvae and pupae) from the adults (workers, queens, males) using the conventional techniques is highly time demanding (human power) and may either harm adult legged adults or their brood.

### 1.a. Ant: Lasius niger

The common black ant, *Lasius niger*, is a monogynous ant species belonging to the subfamily Formicinae, which have cocooned pupae. One can thus find the following developmental stages: legless eggs, legless larvae and (cocooned) pupae with non-functional legs and legged adults (workers, queens, males).

The present separation techniques successfully sorts adult individuals (here tested workers) from their brood (here tested eggs, larvae, cocooned pupae). The duration of cold shocking the *L. niger* colonies by placing them on paper towels in a thin plastic box at -20°C varied between 60 sec-90 sec. Individuals with functional legs needed 30 seconds to 3 minutes to start awakening. Once the first individuals started awakening (after 30seconds), while being placed on the rough surface (a), vibrations were implied by shaking the rough surface on which the insects were lying. Once 30-50% (preferentially to 70-80%) of the insects with functional legs awakened and were holding on the rough surface, as recognised by them not walking over the surface anymore (whilst individuals with non-functional legs are pushed around by the vibrations) vibrations where then put on hold and the insects on the rough surface (a) were then flipped onto the second rough surface (b). The flipping thus allowed the first mechanical separation of insects with functional legs (still holding on the first rough surface (a)) from the rest of the still none-awakened insects with functional legs and the legless individuals and individuals with non-functional legs that are thus transferred onto the second rough surface (b).

At this time point, the first lot of insects with functional legs (holding on surface (a)) were collected.

Thereafter, the procedure of vibrating and flipping of surface (b) onto surface (c), etc. was repeated 2-3 times (or more) to allow for the total separation of individuals with functional legs from legless individuals and individuals with non-functional legs (see Figure 2).

One could also do a second cold shock if needed at this stage. In general, if the surfaces themselves are cooled it is possible to cool the surfaces in different/desired chambers which may be more difficult when using gases which may require channels for entering the desired chambers.

### 1.b. Ant: Linepithema humile

The "Argentine ant" *Linepithema humile* belongs to the subfamily of Dolichoderinae, with free pupae. This polygynous ant species undergoes several developmental stages, comprising legless eggs, legless larvae and (free) pupae with non-functional legs, and legged adults (workers, queens, males).

The duration of cold shocking for *L. humile* colonies by placing them on paper towels in a thin plastic box at -20°C varied between 20sec-90sec. Individuals with functional legs required 30 seconds to 3 minutes to start awakening. Once the first individuals started to awake (after 30seconds), while being placed on the rough surface (a), vibrations were implied by shaking the rough surface on which the insects were lying. Once 30-50% (preferentially to 70-80%) of the insects with functional legs awakened and were holding on the rough surface, as recognised by them not walking over the surface anymore (whilst individuals with non-functional legs are pushed around by the vibrations), vibrations where then put on hold and the insects on the rough surface (a) were then flipped onto the second rough surface (b). The flipping thus allowed the first mechanical separation of insects with functional legs (still holding on the first rough surface (a)) from the rest of the still none-awakened insects with functional legs and the legless individuals and individuals with non-functional legs that are thus transferred onto the second rough surface (b).

At this time point, the first lot of insects with functional legs (holding on surface (a)) were collected.

Thereafter, the procedure of vibrating and flipping of surface (b) onto surface (c), etc. was repeated 2-3 times (or more) to allow for the total separation of individuals with functional legs from legless individuals and individuals with non-functional legs. The applied separation technique separates *L. humile* legged adult ants (here tested workers and males) from their legless brood (her tested eggs, larvae, pupae) (Fig. 2).

### 1.c. Ant: Cardiocondyla obscurior

The polygynous ant *Cardiocondyla obscurior* belongs to subfamily of Myrmicinae, containing free pupae. As developmental stages, one finds legless eggs, legless larvae and (free) pupae with non-functional legs, and legged adults (workers, queens, males).

The duration of cold shocking the *C. obscurior* colonies by placing them on paper towels in a thin plastic box at -20°C varied between 10sec-30sec. Individuals with functional legs required 2-7 minutes to start awakening. Once the first individuals started to awake (after 30seconds), while being placed on the rough surface (a), vibrations were implied by shaking the rough surface on which the insects were lying. Once 30-50% (preferentially to 70-80%) of the insects with functional legs awakened and were holding on the rough surface, as recognised by them not walking over the surface anymore (whilst individuals with non-functional legs are pushed around by the vibrations), vibrations where then put on hold and the insects on the rough surface (a) were then flipped onto the second rough surface (b). The flipping thus allowed the first mechanical separation of insects with functional legs (still holding on the first rough surface (a)) from the rest of the still none-awakened insects with functional legs and the legless individuals and individuals with non-functional legs that are thus transferred onto the second rough surface (b).

At this time point, the first lot of insects with functional legs (holding on surface (a)) were collected.

Thereafter, the procedure of vibrating and flipping of surface (b) onto surface (c), etc. was repeated 2-3 times (or more) to allow for the total separation of individuals with functional legs from legless individuals and individuals with non-functional legs. The applied separation technique on *C. obscurior* separates legged adult ants (here tested workers, queens, and males) from their legless brood (here tested eggs, larvae, pupae) (see Figure 2).

### Example 2: Beetle; Tribolium castaneum

In general there are many kinds of edible beetles (Coleoptera), including aquatic beetles, wood-boring larvae, and dung beetles (larvae and adults). So far 78 edible aquatic beetle species have been listed, mainly belonging to the families Dytiscidae, Gyrinidae and Hydrophilidae. Typically, only the larvae of these species are eaten.

The holometabolous, red flour beetle *Tribolium castaneum* is a species of beetle belonging to the family Tenebrionidae, the darkling beetles. Female beetles lay 300 - 400 eggs directly into flour or other food. Legless eggs develop into legged larvae that transform into pupae (with non-functional legs) that develop into legged adults (males and females). The presented insect separation technique allows the separation of legless eggs and pupae from the larvae with functional legs (including neolarvae) and adult beetles with functional legs (Fig. 2). The duration of cold shocking the *T. castaneum* population by placing them on paper towels in a thin plastic box at -20°C varied between 60sec-90sec. Individuals with functional legs required 2-7 minutes to start awakening. Once the first individuals started to awake (after 30seconds), while being placed on the rough surface (a), vibrations were implied by shaking the rough surface on which the insects were lying. Once 30-50% (preferentially to 70-80%) of the insects with functional legs awakened and were holding on the rough surface, as recognised by them not walking over the surface anymore (whilst individuals with non-functional legs are pushed around by the vibrations), vibrations where then put on hold and the insects on the rough surface (a) were then flipped onto the second rough surface (b). The flipping thus allowed the first mechanical separation of insects with functional legs (still holding on the first rough surface (a)) from the rest of the still none-awakened insects with functional legs and the legless individuals and individuals with non-functional legs that are thus transferred onto the second rough surface (b).

At this time point, the first lot of insects with functional legs (holding on surface (a)) were collected.

Thereafter, the procedure of vibrating and flipping of surface (b) onto surface (c), etc. was repeated 2-3 times (or more) to allow for the total separation of individuals with functional legs from legless individuals and individuals with non-functional legs. Here tested eggs, neolarvae, larvae, adults (male/female)

### Example 3: Termite; Reticulitermes grasse

Termites are renowned for their capacity to devour wood. Damage from termites is said to cost over half a billion dollars per year in the United States of America alone. Termites are considered a delicacy in many parts of the world. They are consumed both as main and side dishes, or simply eaten as snack foods after they have been de-winged, fried and sun-dried, and are also used as therapeutic resources. *Reticulitermes grasse* is a termite eusocial insect species in the order Isoptera, belonging to the hemimetabolous insects, i.e. lacking the pupal stage.

In termites, the queens and kings represent the (legged) adult reproductive individuals, and the workers and soldiers represent (legged) subadults performing colony maintenance tasks. The 4-15 millimetres workers and soldiers are characterized by their feeding, caregiving and protective skills. The presented separation technique has successfully sorted legless eggs from individuals with functional legs (here tested soldiers and workers) of termites. It is important to note that it is crucial to "cold shock" the termite colonies only very shortly. The duration of cold-shocking the colony of termites placing it on paper towels in a thin plastic box at -4°C varied between 3-5 sec. Individuals with functional legs required 2-10 minutes to start awakening. Once the first individuals started to awake (after 30seconds), while being placed on the rough surface (a), vibrations were implied by shaking the rough surface on which the insects were lying. Once 30-50% (preferentially to 70-80%) of the insects with functional legs awakened and were holding on the rough surface, as recognised by them not walking over the surface anymore (whilst individuals with non-functional legs are pushed around by the vibrations), vibrations where then put on hold and the insects on the rough surface (a) were then flipped onto the second rough surface (b). The flipping thus allowed the first mechanical separation of insects with functional legs (still holding on the first rough surface (a)) from the rest of the still none-awakened insects with functional legs and the legless individuals and individuals with non-functional legs that are thus transferred onto the second rough surface (b).

At this time point, the first lot of insects with functional legs (holding on surface (a)) were collected.

Thereafter, the procedure of vibrating and flipping of surface (b) onto surface (c), etc. was repeated 2-3 times (or more) to allow for the total separation of individuals with functional legs from legless individuals and individuals with non-functional legs (see Figure 2).

### Example 4: Automation

An automation machine executing the separation process of the present invention may be used.

In general, the automation procedure may be used based on a multi-layer box system as is exemplified in Figure 5, which is interconnected in a step-wise approach. That is, the devices 10 and 20 are in the form of boxes, e.g. in the form of cuboids. It is possible to also use other geometries of the devices. In particular, the different levels of surfaces can also be provided in one device, meaning that there are no separable boxes. The boxes/devices may comprise two (or even more) levels of surfaces, wherein (i) the upper surfaces (and optionally further lower surfaces) are made of a rough material, motorized as such producing vibrations at different frequencies and are foldable and (ii) the bottom surfaces (second surfaces) are made of a smooth surface, foldable thus allowing to open and transfer of the samples from the first box to the second box. All boxes can be made identical, and only the first box may be sealed with a lid (but a seal is not mandatory), with an air-transferable-membrane allowing for the flow of cold air (see Figures 5 and 6).

As a first step of processing, the mixture of overlapping lifestages of insects including individuals with functional legs and legless individuals and/or individuals with non-functional legs is provided. The mixture is then transferred into the first compartment 15 onto the upper rough surfaces (first rough surfaces). Then, cold air is blown into the first compartment 15 or the surfaces are directly cooled, leading to the cold shock of the insects (see Figure 3c).

Once the whole insect population "stops moving", the upper first rough surfaces can start shaking and vibrating for several minutes (depending on the insect species) until the first individuals awaken and gradually open for gradually flipping of the insects onto the bottom boxes (see Fig. 4). This procedure will allow for the separation of individuals, wherein individuals with functional legs will attach to the rough surface of the first compartment 15 whereas the legless individuals and some legged ones would fall onto the second (smooth) surfaces (see Fig. 4). At this stage the upper rough surfaces of the first compartment 15 will close so that the rough surfaces are horizontal again (see Fig. 5) and the first batch of legged individuals can be sorted out and collected.

Later on, the bottom second smooth surfaces may opened/ turned, transferring the rest of the unsorted un-awakened legged insects and the legless ones into the second box, namely on the upper rough surfaces 213 of the second box (Fig. 3c). The same procedure will then follow, leading to a second separation of the second batch of insects (Fig. 6). The number of boxes in this multi-layer boxes system would vary depending on the nature and number of processed insects as well as on the requested success rate.

### Reference list

- 10: separation device
- 11: cold air channel
- 12: lid with air transferable membrane
- 13: first rough surfaces which can be turned and to which vibrations can be imparted by means of e.g., a motor
- 14: second smooth surfaces which can be flipped
- 15: first compartment
- 16: second compartment
- 20: separation device
- 213: first rough surfaces which can be turned and to which vibrations can be imparted by means of e.g., a motor
- 214: second smooth surfaces which can be turned
- 215: first compartment
- 216: second compartment

### Cited literature

- 1.: Bellows, T.S., et al. (1999) Handbook of biological control: principles and applications of biological control. Academic Press.

## Claims

1. Process for separating insects, comprising:
1) providing a mixture of insects of one or more insect species, wherein said mixture contains a first group of insects and a second group of insects, wherein the first group consists of individuals with means for holding onto rough surfaces, and the second group consists of individuals without means for holding onto rough surfaces; and
2) optionally immobilizing said mixture of insects by cold shocking or anaesthetizing; and
3) transferring the mixture of insects onto one or more first rough surfaces of a separation device, wherein step 3 may be prior to or after step 2, and wherein the first rough surfaces do not contain holes for separating the insects via sieving; and
4) optionally inducing vibrations to at least the one or more first rough surfaces; and
if step 2 was applied, allowing the immobilized insects to awake until at least two or more of said insects start moving again, wherein said vibrations can be induced directly after the insects awoke and, in addition, already during the phase of awakening; and
5) turning, bending or folding at least parts of the one or more first rough surfaces such that individuals without means for holding onto rough surfaces fall from the one or more first rough surfaces, thereby separating them from the individuals remaining on the one or more first rough surfaces.

2. The process of claim 1, wherein the means for holding onto rough surfaces comprise functional legs, and wherein individuals with non-functional legs or without legs cannot hold onto rough surfaces.

3. The process of claim 1 or 2, wherein the cold shocking of the mixture of insects is achieved by (i) cooling the one or more first rough surfaces to which the insects have been transferred to in step 3 and/or by (ii) cooling the container containing the insects and/or by (iii) introducing a cold or anaesthetizing gas onto the mixture of insects;
preferably wherein cold shocking the mixture of insects is performed at a temperature of from 12°C to -50°C.

4. The process of any of the preceding claims, wherein
(i) vibrations are imparted, preferably the vibrations are applied immediately after cold shocking, namely before the first insect starts to move; and/or
(ii) steps 2, 4 and 5 are repeated for the insects of the one or more first rough surfaces; and/or
(iii) the individuals from the second surfaces are transferred to one or more third surfaces, preferably one or more third rough surfaces; and/or
(iv) steps 2, 4 and 5 are repeated for the insects of the one or more second rough surfaces or the one or more third rough surfaces.

5. The process of any of the preceding claims, wherein the individuals from the one or more first rough surfaces, and/or from the one or more second surfaces and/or from the further surfaces are collected.

6. The process of any of the preceding claims, further comprising flipping the one or more second surfaces so that the insects fall to one or more third rough surfaces, and repeating the procedure in Steps 1-4 for the insects of the one or more third rough surfaces starting with further cold shocking or anaesthetizing said mixture of insects.

7. Device (10, 20) for separating individuals with functional legs from individuals without functional legs of one or more insect species, comprising
- one or more first rough surfaces (13, 213) onto which a mixture of insects may be placed, wherein at least a part or portion of the one or more first rough surfaces (13, 213) may be turned, bent or folded so that legless individuals and/or individuals with non-functional legs can fall down from said one or more first rough surfaces (13, 213), and wherein the first rough surfaces do not contain holes for separating the insects via sieving, and
- means for imparting vibrations to at least the one or more first rough surfaces.

8. The device of the preceding claim, wherein the total surface area of the one or more first rough surfaces (13, 213) is at least 10 cm², at least 1000 cm², or at least 3 m².

9. The device of any of claims 7 or 8, wherein the one or more first rough surfaces (13, 213) is/are made of cellulosic material, wood, finely creped paper, or metal optionally with a coating to impart roughness, or polymeric material.

10. The device of any of claims 7-9, comprising one or more second smooth or rough surfaces (14, 214).

11. The device of any of claims 7-10, wherein the one or more second surfaces (14, 214) are positioned at a level below the one or more first rough surfaces (13, 213) so that insects can fall to said one or more second surfaces when turning/bending/folding the one or more first rough surfaces.

12. The device of any of claims 7-11, wherein the rough surfaces can be turned by up to 180°, preferably 90°, with respect to the horizontal plane, and/or wherein the one or more rough surfaces are flips/traps (see Figures 3-6).

13. The device of any of claims 7-12, wherein the device comprises a container and the one or more, preferably two, first rough surfaces are the intermediate floor of the container and the one or more second surfaces are the bottom of the container.

14. Use of the device of any of claims 7-13 for separating overlapping lifestages of insects, in particular for separating a mixture of insects of one or more insect species, wherein said mixture contains overlapping insect lifestages and is a mixture of a first group and a second group, wherein the first group comprises individuals with functional legs, and the second group comprising legless individuals, and/or individuals with non-functional legs.

15. The use of claim 13, wherein the use is in a food, feed, cosmetic or pharmaceutical-industry application.
